(19) Europäisches Patentamt
European Patent Office
Office européen des brevets

(11)     EP 2 615 438 B1

(12)                    EUROPEAN PATENT SPECIFICATION

(45) Date of publication and mention
of the grant of the patent:
**25.03.2015 Bulletin 2015/13**

(51) Int Cl.:
*G01L 3/04* *(2006.01)*     *G01L 3/10* *(2006.01)*

(21) Application number: **12196018.1**

(22) Date of filing: **07.12.2012**

(54) **Torque measuring device for boring machine**

Drehmomentmessvorrichtung für Bohrmaschine

Dispositif de mesure de couple pour machine de forage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2012 IT MO20120003**

(43) Date of publication of application:
**17.07.2013 Bulletin 2013/29**

(73) Proprietor: **PAMA S.P.A.**
**38068 Rovereto (TN) (IT)**

(72) Inventor: **Nainer, Alberto**
**38123 Trento (IT)**

(74) Representative: **Crugnola, Pietro et al**
**Luppi Crugnola & Partners S.r.l.**
**Viale Corassori, 54**
**41124 Modena (IT)**

(56) References cited:
**DE-B1- 2 654 863     US-A- 4 432 245**

**Description**

The invention relates to boring machine tools and, in particular, refers to a measuring device per measuring a twisting moment, or torque, applied to a boring bar of a boring machine.

Boring machines of known type comprise a hollow spindle and a boring bar. The latter is provided with a first end to which, in use, a machining tool is fixed that is arranged for performing a required machining, and a second end, opposite the first end, which is connected, free to rotate, to an axial movement slide of the machine tool.

In order to perform this machining, the boring bar has to be able to rotate on its own longitudinal axis and to be able to slide or translate axially.

For this purpose, the hollow spindle is provided with a cylindrical cavity arranged for receiving the boring bar and transmitting a rotation to the latter and for supporting the latter in translation. In particular, rotation motion is transmitted by the hollow spindle to the boring bar by the use of transmission means, comprising, for example, one or more tabs that are fixed to the hollow spindle and are slidably engaged in respective longitudinal grooves of the boring bar, which prevent corresponding rotation between the hollow spindle and the boring bar and thus transmit a twisting moment, or torque, to the boring bar.

The hollow spindle, that is mounted rotatably inside a fixed support of the machine tool by rolling precision bearings, slidably supports the boring bar when the latter, during operation, is translated by plain or hydrostatic bearings.

In the first case, the hollow spindle comprises inside thereof one or more plain bearings, so-called brasses, which enable the boring bar to be guided slidably and axially.

In the second case, on the other hand, the hollow spindle comprises brasses or bushes provided with hydrostatic pads or pockets supplied with pressurised fluid that enable the boring bar to be slidably supported during translation.

In use, the boring bar is subject to a twisting moment or torque, which is substantially applied at a coupling zone between the transmission means of the hollow spindle and the boring bar, i.e. in the zone in which transmission of the rotation motion from the hollow spindle to the boring bar occurs. The hollow spindle is rotated with defined torque by a motor of the machine tool.

In use, the boring bar is also subject to resistant torque that is substantially applied at the first end thereof, i.e. at a connecting zone between the boring bar and the machining tool.

The torque and the resistant torque generate torsional stress on and along the boring bar and determine a angular rotation (torsion angle) of the bar sections with respect to a neutral longitudinal axis of the bar. In particular, under the effect of the torque and resistant torque, the section of the bar at the connecting zone of the tool rotates with respect to the section at the coupling zone with the hollow spindle by a defined torsion angle. The latter is variable not only in function of the value of the torque and resistant torque and the mechanical and geometrical/dimensional features of the boring bar, but also in function of the distance between the points of application of the torque and of the resistant torque, i.e. the distance between respectively the sections in the connection zone of the tool and in the coupling zone with the hollow spindle. The torsion angle varies in function of the axial position of the boring bar with respect to the hollow spindle. In particular, the torsion angle is maximum when the transmission means is near the second end of the boring bar, whereas it is minimum when the transmission means is near the first end of the boring bar. Different devices for measuring torque are known, such as, for example, a device for detecting the current absorbed by the motor of the hollow spindle. Nevertheless, these measuring devices are generally imprecise and thus do not allow the moment actually applied to the tool to be checked with precision and do not allow the machining parameters of the boring machine tool to be adjusted retroactively to maintain the moment within a set values range.

A further measurement device for sensing torsion in a grinding machine is disclosed in the application US 4,432,245.

An object of the present invention is to improve known boring machine tools.

Another object is to make a measuring device for boring bars of boring machines that enables a twisting moment or torque to be measured precisely by acting on an end of the boring bar supporting a machining tool, in order to check, also retroactively, the operation of the tool and obtain machinings of great precision and accuracy.

A further object is to make a measuring device having a reliable and precise operation and a simple structure that is easily applicable to even existing boring machine tools.

These objects and still others are achieved by a torque measuring device made according to one or more of the claims set out below.

The invention can be better understood and implemented with reference to the attached drawings, which illustrate an embodiment thereof by way of non-limiting example, in which:

Figure 1 is a simplified cross section of a spindle and a boring bar of a boring machine tool associated with a measuring device according to the present invention;

Figure 2 is an enlarged and partial view or the boring bar and of the measuring device of Figure 1;

Figure 3 is a diagram of output signals from sensor means of the measuring device of Figure 1;

Figure 4 is a schematic view of a computing unit of the measuring device of Figure 1.

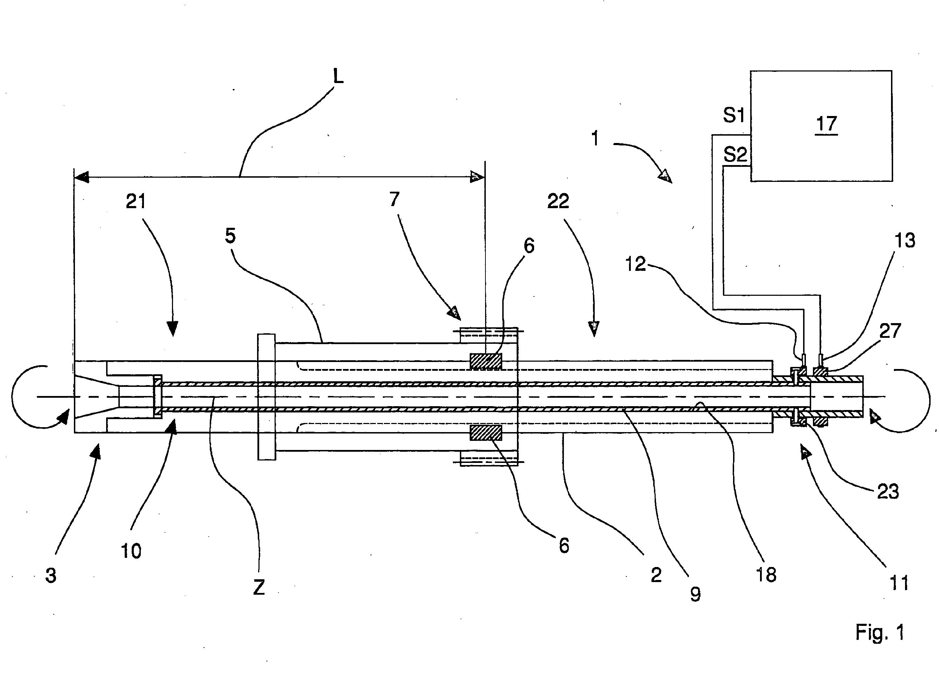

With reference to Figure 1, a measuring device 1 for measuring a twisting moment or torque is shown comprising a spindle 5 and a boring bar 2 of a boring machine tool, which is of known type and is not illustrated, which is suitable for performing boring or milling machinings on workpieces.

In use, said twisting moment is applied to said boring bar 2 when said boring bar 2 is rotated and is connected to a machining tool to perform said machinings. The boring bar 2 is rotatable around and translatable along a working axis Z.

The boring bar 2 comprises inside thereof a longitudinal cavity 18.

The boring bar 2 comprises a first free end 3 to which, in use, the machining tool is fixed, which is not illustrated, which is arranged for performing boring and milling machinings on the workpieces, and a second end, which is not illustrated, opposite the first end 3, which is rotatably connected to an axial movement slide of the machine tool, which is of known type and is not illustrated in the drawings.

The spindle 5 comprises a sleeve or tubular collar mounted coaxially to the boring bar 2 and connected to a seat of supporting means of the machine tool, for example by revolving bearings that enable rotation thereof also at high speed around the working axis Z and at the same time prevent linear movement thereof along said working axis Z.

The spindle 5 is rotated around the working axis Z by actuating means of the machine tool that is of known type and is not illustrated in the Figures.

The spindle 5 comprises a cavity in which the boring bar 2 is engaged and is arranged for transmitting a rotation motion to the boring bar 2 and is arranged for supporting the boring bar 2 during translation. In particular, rotation motion is transmitted by the spindle 5 to the boring bar 2 by using transmission means 6, comprising, for example, one or more tabs fixed to the spindle 5 and slidably engaged in respective longitudinal grooves of the boring bar 2, which prevent corresponding rotation between the spindle 5 and the boring bar 2 and thus transmit to the latter the rotation of the spindle 5, i.e. the twisting moment or torque. The spindle 5 then slidably supports the boring bar 2 when the latter is linearly translated during operation.

This supporting action can be achieved by plain bearings or hydrostatic bearings.

In the first case, the spindle 5 comprises inside thereof one or more plain bearings, so-called brasses, which enable the boring bar 2 to be guided slidably and axially.

In the second case, on the other hand, the spindle 5 comprises brasses or bushes provided with hydrostatic pads or pockets supplied with pressurised fluid, that enable the boring bar 2 to be slidably supported in a hydrostatic manner along the working axis Z.

During operation, the boring bar 2 is subject to a twisting moment or torque, which is substantially applied at a coupling zone 7 arranged at the interface between the transmission means 6 of the spindle 5 and the boring bar 2, i.e. the zone in which the rotation motion is transmitted by the spindle 5 to the boring bar 2. The spindle 5 is in turn rotated with a defined torque by the actuating means of the boring machine tool.

The boring bar 2 is further subject to a resistant torque applied at the first end 3 thereof, i.e. in the connecting zone between the boring bar 2 and the machining tool.

Torque and resistant torque generate on a first portion 21 of the boring bar 2, comprised between the first end 3 and the coupling zone 7, a torsion stress and determine a angular rotation (torsion angle) of the sections of the boring bar 2 with respect to a neutral longitudinal axis thereof, which corresponds to the working axis Z. In particular, under the effect of the torque and resistant torque the first end 3 and the second portion 22 (i.e. the first portion 21) are subject to an angular displacement $\Delta\theta$ or torsion angle. In other words, the section of the boring bar at the first end 3 in the connecting zone of the tool rotates with respect to the section at the coupling zone 7 with the spindle 5 by said torsion angle. The latter is variable not only in function of the value of the twisting moment applied and the mechanical and geometrical/dimensional features of the boring bar 2, but also in function of a length L of the first portion 21, i.e. of a distance between the sections respectively in the connecting zone of the tool and in the coupling zone 7 with the spindle 5, which is variable during operation of the boring machine.

The torsion angle is thus variable in function of the axial position of the boring bar 2 with respect to the spindle 5, i.e. the position of the coupling zone 7 with respect to the boring bar 2.

In particular, the torsion angle is maximum when the transmission means 6 is further from the first end 3 of the boring bar 2, whereas it is minimum when the transmission means 6 is near the first end 3.

The distance between the first end 3 and the transmission means 6 is thus sufficiently great to generate an appreciable torsion angle.

The position of the coupling zone 7 with respect to the boring bar 2 that corresponds to the application zone of the twisting moment by the spindle 5 on the boring bar 2 divides the boring bar 2 into the first portion 21 subject to torsional stress and a second portion 22 that is not subject to torsional stress that is comprised between the coupling zone 7 and the second end of the boring bar.

In order to obtain a measurement of the torque transmitted to the boring bar 2 it is thus possible measure the torsion angle between the section at the first end 3 and the section at the coupling zone 7.

For this purpose, the measuring device 1 comprises a tubular element 9 of elongated shape, inserted into the boring bar 2.

In particular, the tubular element 9 is inserted inside the longitudinal cavity 18 of the boring bar 2 and extends along the working axis Z, which is also a rotation axis thereof. The tubular element 9 can have the shape of a hollow pipe and can be mounted coaxially to the boring bar 2 free to rotate in relation to the boring bar 2. In particular, the tubular element 9 is housed with a clearance in the longitudinal cavity 18 of the boring bar 2.

The tubular element 9 is provided with a first end part 10 fixed to the first end 3, in such a manner as to rotate together with the latter. In this manner, a second end part 11 of the tubular element 9 opposite said first end part 10, can rotate around the working axis Z with the first end 3 of the boring bar 2 and by the same torsion angle. As the tubular element 9 is not subject to twisting moment, rotation between the first end part 10 and the second end part 11 is null.

The measuring device 1 comprises first sensor means 12 and second sensor means 13.

The first sensor means 12 is associated with the tubular element 9, for example it is connected to the tubular element 9 at the second end part 11 thereof.

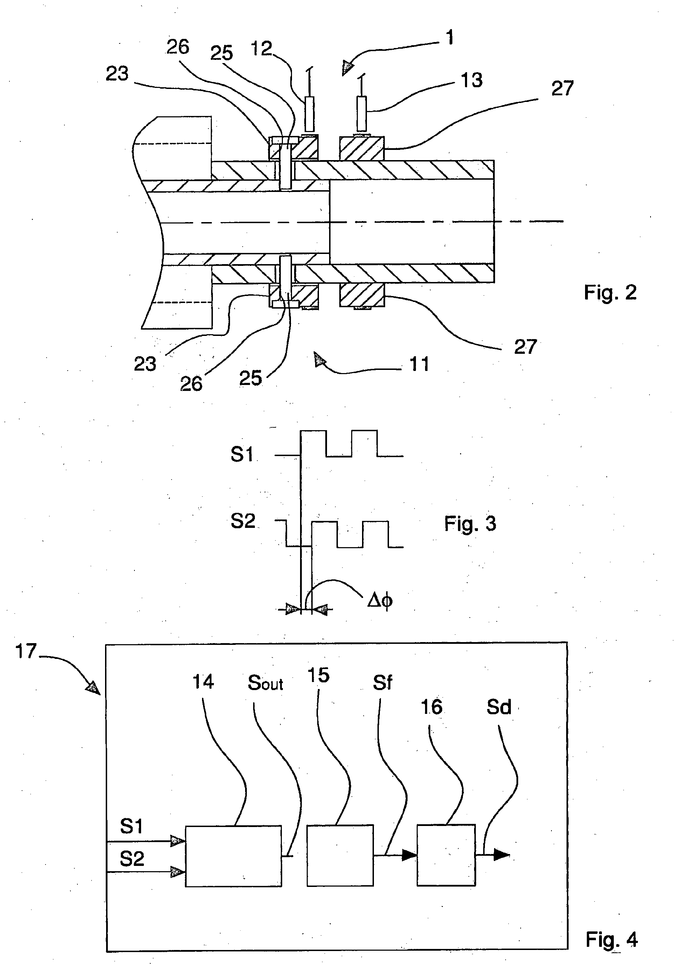

As shown in detail in Figure 2, the first sensor means 12 is connected to a supporting ring 23 that is rotatably mounted around the boring bar 2 at the second end part 11 of the tubular element 9. The supporting ring 23 is in turn connected to the tubular element 9, in particular, at the second end part 11, by one or more pins 25 passing through respective slots 26 obtained in the boring bar 2. In this manner, the rotation of the tubular element 9 is transmitted to the supporting element 3 by the pins 25 that are circumferally slidable in the respective slots 26.

The second sensor means 13 is associated with the boring bar 2 in the second portion 22, interposed between the coupling zone 7 and the second end of the boring bar 2.

In particular, the second sensor means 13 is connected to a further supporting ring 27 that is mounted around and is fixed to the boring bar 2 and rotates with the latter. The further supporting ring 27 then rotates together with the second portion 22 of the boring bar 2. The first sensor means 12 detects a first signal S1 indicating rotation of the tubular element 9 and thus a rotation of the first end 3, as the tubular element 9 is fixed to and rotates with the aforesaid first end 3. The first sensor means 12 can comprise a respective encoder for acquiring the first signal S1.

With reference in particular to Figure 3, the first signal S1 is a periodic signal, for example a signal with a sinusoidal pattern or a square wave, having a frequency corresponding to a multiple of the rotation frequency of the tubular element 9.

The second sensor means 13 detects a second signal S2 indicating a rotation of the boring bar 2 in the second portion 22 that is not subject to torque. Still with reference to Figure 3, also the second signal S2 is a periodic signal, for example with a sinusoidal pattern or a square wave, having a frequency corresponding to a multiple of the rotation frequency of the boring bar 2 and substantially corresponding to the frequency of the tubular element 9. The first sensor means 12 and the second sensor means 13 have the same resolution and thus produce signals S1 and S2 of the same frequency, possibly displaced by an angle. Also the second sensor means 13 can comprise a respective encoder for acquiring the second signal S2.

The two signals S1 and S2 are sent to a computing unit 17 of the measuring device 1 of the machine tool for a processing step.

The computing unit 17 can be dislocated in a control unit of the boring machine tool.

The two signals S1 and S2 are generally displaced even in the absence of a torque transmitted by the spindle 5 to the boring bar 2, owing to an angular displacement between the first sensor means 12 and the second sensor means 13 due to the mechanical mounting thereof.

Between the two signals S1 and S2 there thus exists an initial displacement $\phi_0$, with zero torque.

When the boring bar 2 is subject to torsional stress, on the other hand, between the first signal S1 and the second signal S2 an operating displacement $\phi$ is determined.

From the difference between the operating displacement $\phi$ and the initial displacement $\phi_0$ a signal displacement $\Delta\phi$ ($\Delta\phi=\phi-\phi_0$) is obtained that is a function of the angular displacement $\Delta\theta$ between the first end 3 and the section in the coupling zone 7 of the boring bar 2, i.e. the torsion angle to which the first portion 21 is subject.

The signal displacement $\Delta\phi$ is measured by the computing unit 17 of the measuring device 1.

The relationship between $\Delta\Phi$ and $\Delta\theta$ depends on the number of pulses per revolution respectively of the first sensor means 12 and of the second sensor means 13, this means that the relationship between $\Delta\Phi$ and $\Delta\theta$ depends on the resolution of the first sensor means 12 and of the second sensor means 13.

With reference to Figure 4, the computing unit 17 comprises a comparator or phase detector 14 to which the first sensor means 12 and the second sensor means 13 are connected in such a manner that the phase detector 14 receives as an input the first signal S1 and the signal S2.

The phase detector 14 processes the first input signal S1 and second input signal S2 and, in particular, the respective phases, to determine an output signal $S_{out}$ indicating the signal displacement $\Delta\phi$.

The phase detector 14 can be made by using a gate of the XOR type, which can also be implemented with a plurality of gates of the NAND type that are suitably connected, a sample and hold circuit, a loading pump or a Gilbert cell.

The computing unit 17 moreover comprises a filter 15, in particular of the low-pass type, to which the output signal $S_{out}$ is sent that is obtained at the output of the phase detector 14. The low-pass filter 15 is arranged for filtering the frequencies of the output signal $S_{out}$ in order to eliminate the frequency components above a determined threshold known as cutting frequency and to let a filtered signal Sf pass through that is proportional to the displacement signal $\Delta\phi$.

The low-pass filter 15 can be made by using an RC circuit, which has the function passing all the frequency components of the signal that it receives at its input comprised between 0 Hz and the cutting frequency that is determined by the specific values of the resistance R and the capacitor C.

The low-pass filter 15 also has the object of eliminating the effect of possible electrical and/or mechanical disturbances such as, for example, vibrations that the first sensor means 12, the second sensor means 13, the tubular element 9 or the boring bar 2 may have.

The computing unit 17 lastly comprises an analogue/digital converter 16 that receives as an input the filtered signal Sf obtained at the output of the low-pass filter 15 that is a function of the signal displacement $\Delta\phi$.

The analogue/digital converter 16 of the computing unit 17 is able to convert the filtered signal Sf that is of analogue type into a digital signal Sd comprising a series of discrete values.

The digital signal Sd that is an output from the analogue/digital converter 16 indicates the angular displacement $\Delta\theta$ or torsion angle and is processed by the computing unit 17 to obtain the value of the twisting moment, once the aforesaid torsion angle is known, as will be explained better below.

Owing to the computing unit 17, it is thus possible to measure the torsion angle due to the twisting moment applied to the first portion 21 of the boring bar 2.

For bars with a circular section, as the boring bar 2 can be, an exact solution can be determined for the problem of the expression to the torsional stress applied to a portion thereof.

In fact, in this case, the twisting moment Mt is stated by the following formula:

$$Mt = \frac{\Delta\theta * J * G}{L} \qquad\qquad \text{[eq. 1]}$$

where:

$\Delta\theta$ is the angular displacement or torsion angle;
G is the tangential elasticity modulus of the material of the boring bar 2;
L is the length of the first portion 21 of the boring bar 2 subject to torsional stress
J is the moment of polar inertia. As the value $\Delta\theta$ is measured in the manner disclosed previously, and thus it is known, L is the length of the first portion 21 of boring bar 2, i.e. the portion interposed between the coupling zone 7, identified between the transmission means 6 of the spindle 2 and the boring bar 2, and the first end 3 in which the machining tool is applied to the boring bar 2, and, it is consequently known, G and J are design parameters inasmuch as they depend on the geometry and on the material of which the boring bar 2 is composed and are thus easily determinable, it is possible to determine the twisting moment Mt by the above equation [eq. 1].

Owing to the measuring device 1 it is thus possible to determine with precision the torsion angle to which the first portion 21 of the boring bar 2 is subject and, subsequently, calculate the actual twisting moment at the first end 3 of the boring bar 2, i.e. torque acting on the tool during machining of the workpiece.

The measurement of the twisting moment Mt calculated by the computing unit 17 is sent to the control unit of the boring machine that commands the actuating means arranged for rotating the spindle 5. The control unit ascertains the correct function of the boring machine tool, comparing the value of the twisting moment applied to the first end 3, i.e. to the tool, with a tolerance range of values of the twisting moment.

If the twisting moment falls outside the tolerance range, the control units acts retroactively on the machining parameters to vary the torque absorbed by the tool. In this manner, it is possible to correct or modify a previously set torque value on the spindle 5 and, consequently, on the boring bar 2, according to the torsion angle measured by the measuring device 1.

In this manner, the measuring device 1 enables correct operation of the machine tool to be ascertained and the torsion to be compensated for to which the boring bar 2 may be subject during use.

**EP 2 615 438 B1**

**Claims**

1. Measuring device for a boring machine tool that comprises a boring bar (2), that is movable along and around a working axis (Z) and is provided with a first end (3) that is suitable for supporting a machining tool, and a spindle (5) for slidably supporting said boring bar (2) and transmitting a torque thereto at a coupling zone (7), a first portion (21) of said boring bar (2) comprised between said first end (3) and said coupling zone (7) being subject to torsion, said measuring device (1) comprising:

   - a tubular element (9) inserted into said boring bar (2) and provided with a first end part (10) fixed to said first end (3) in such a manner that said tubular element (9) rotates together with the latter;
   - first sensor means (12) associated with said tubular element (9) to detect a first signal (S1) indicating rotation of said tubular element (9) and thus of said first end (3);
   - second sensor means (13) associated with a second portion (22) of said boring bar (2) that is not subject to torsion to detect a second signal (S2) indicating rotation of said boring bar (2) in said second portion (22); and
   - a computing unit (17) for receiving and processing said first signal (S1) and said second signal (S2) and calculating an angular displacement ($\Delta\theta$) between said first end (3) and said second portion (22), said angular displacement ($\Delta\theta$) being a torsion angle to which said first portion (21) is subject.

2. Device according to claim 1, wherein said first sensor means (12) is connected to said tubular element (9) at a second end part (11) that is opposite said first end part (10) and adjacent to said second portion (22) of said boring bar (2).

3. Device according to claim 1 or 2, wherein said tubular element (9) is housed in a longitudinal cavity (18) of said boring bar (2), in particular substantially coaxial with said working axis (Z).

4. Device according to any preceding claim, wherein said computing unit (17) comprises a phase detector (14) arranged for processing said first signal (S1) and said second signal (S2) and calculating an output signal (Sout) indicating said angular displacement ($\Delta\theta$).

5. Device according to claim 4, wherein said phase detector (14) is chosen from a group comprising: gate XOR, which can also be implemented with a plurality of gates of the NAND type, a sample and hold circuit, a loading pump, a Gilbert cell.

6. Device according to claim 4 or 5, wherein said computing unit (17) comprises a low-pass filter (15) arranged for generating a filtered signal (Sf) devoid of the frequency components of said output signal (Sout) above a defined cutting frequency.

7. Device according to claim 6, wherein said low-pass filter (15) is an RC circuit.

8. Device according to claim 6 or 7, wherein said computing unit (17) comprises an analogue/digital converter (16) arranged for converting said filtered signal (Sf) of analogue type into a digital signal (Sd), said digital signal (Sd) corresponding to said angular displacement ($\Delta\theta$).

9. Device according to claim 8, wherein said computing unit (17) is arranged for processing said angular displacement ($\Delta\theta$) and calculating a torque acting on said boring bar (2) at said first end (3).

10. Boring machine tool comprising a boring bar (2), that is movable along and around a working axis (Z) and is provided with a first end (3) that is suitable for supporting a machining tool, and a spindle (5) for slidably supporting said boring bar (2) and transmitting a torque thereto at a coupling zone (7) defining on said boring bar (2) a first portion (21) subject to torsion, said machine being **characterised in that** it comprises a measuring device (1) according to any preceding claim.

11. Machine according to claim 10, comprising actuating means for rotating said spindle with a torque and a control unit for controlling said actuating means and connected to a computing unit (17) of said measuring device (1) to adjust said torque according to a torsion angle ($\Delta\theta$) of said first portion (21) detected by said measuring device (1).

**Patentansprüche**

1. Messvorrichtung für ein Bohrmaschinenwerkzeug, das eine Bohrstange (2), die entlang einer und um eine Arbeitsachse (Z) beweglich ist und mit einem ersten Ende (3) versehen ist, das zum Abstützen eines Bearbeitungswerkzeugs geeignet ist, und eine Spindel (5) zum verschiebbaren Abstützen der Bohrstange (2) und Übertragen eines Drehmoments auf diese in einer Kopplungszone (7) umfasst, wobei ein erster Abschnitt (21) der Bohrstange (2), der zwischen dem ersten Ende (3) und der Kopplungszone (7) liegt, einer Torsion unterliegt, wobei die Messvorrichtung (1) umfasst:

   - ein röhrenförmiges Element (9), das in die Bohrstange (2) eingesetzt ist und mit einem ersten Endteil (10) versehen ist, der an dem ersten Ende (3) in einer solchen Weise befestigt ist, dass sich das röhrenförmige Element (9) zusammen mit dem letzteren dreht;
   - eine erste Sensoreinrichtung (12), die dem röhrenförmigen Element (9) zugeordnet ist, um ein erstes Signal (S1) zu detektieren, das die Drehung des röhrenförmigen Elements (9) und folglich des ersten Endes (3) angibt;
   - eine zweite Sensoreinrichtung (13), die einem zweiten Abschnitt (22) der Bohrstange (2) zugeordnet ist, der keiner Torsion unterliegt, um ein zweites Signal (S2) zu detektieren, das die Drehung der Bohrstange (2) im zweiten Abschnitt (22) angibt; und
   - eine Berechnungseinheit (17) zum Empfangen und Verarbeiten des ersten Signals (S1) und des zweiten Signals (S2) und Berechnen einer Winkelverschiebung ($\Delta\theta$) zwischen dem ersten Ende (3) und dem zweiten Abschnitt (22), wobei die Winkelverschiebung ($\Delta\theta$) ein Torsionswinkel ist, dem der erste Abschnitt (21) unterliegt.

2. Vorrichtung nach Anspruch 1, wobei die erste Sensoreinrichtung (12) mit dem röhrenförmigen Element (9) an einem zweiten Endteil (11) verbunden ist, der zum ersten Endteil (10) entgegengesetzt ist und zum zweiten Abschnitt (22) der Bohrstange (2) benachbart ist.

3. Vorrichtung nach Anspruch 1 oder 2, wobei das röhrenförmige Element (9) in einem Längshohlraum (18) der Bohrstange (2), insbesondere im Wesentlichen koaxial mit der Arbeitsachse (Z), aufgenommen ist.

4. Vorrichtung nach einem vorangehenden Anspruch, wobei die Berechnungseinheit (17) einen Phasendetektor (14) umfasst, der zum Verarbeiten des ersten Signals (S1) und des zweiten Signals (S2) und zum Berechnen eines Ausgangssignals (Sout), das die Winkelverschiebung ($\Delta\theta$) angibt, beschaffen ist.

5. Vorrichtung nach Anspruch 4, wobei der Phasendetektor (14) aus einer Gruppe ausgewählt ist, die umfasst: ein Gatter EXKLUSIV-ODER, das auch mit mehreren Gattern vom NICHT-UND-Typ implementiert werden kann, eine Abtast- und Halteschaltung, eine Ladepumpe, eine Gilbert-Zelle.

6. Vorrichtung nach Anspruch 4 oder 5, wobei die Berechnungseinheit (17) ein Tiefpassfilter (15) umfasst, das zum Erzeugen eines gefilterten Signals (Sf) ohne die Frequenzkomponenten des Ausgangssignals (Sout) über einer definierten Grenzfrequenz beschaffen ist.

7. Vorrichtung nach Anspruch 6, wobei das Tiefpassfilter (15) eine RC-Schaltung ist.

8. Vorrichtung nach Anspruch 6 oder 7, wobei die Berechnungseinheit (17) einen Analog/Digital-Wandler (16) umfasst, der zum Umwandeln des gefilterten Signals (Sf) vom analogen Typ in ein digitales Signal (Sd) beschaffen ist, wobei das digitale Signal (Sd) der Winkelverschiebung ($\Delta\theta$) entspricht.

9. Vorrichtung nach Anspruch 8, wobei die Berechnungseinheit (17) zum Verarbeiten der Winkelverschiebung ($\Delta\theta$) und Berechnen eines Drehmoments, das auf die Bohrstange (2) an dem ersten Ende (3) wirkt, beschaffen ist.

10. Bohrmaschinenwerkzeug mit einer Bohrstange (2), die entlang einer und um eine Arbeitsachse (Z) beweglich ist und mit einem ersten Ende (3) versehen ist, das zum Abstützen eines Bearbeitungswerkzeugs geeignet ist, und einer Spindel (5) zum verschiebbaren Abstützen der Bohrstange (2) und Übertragen eines Drehmoments auf diese in einer Kopplungszone (7), die an der Bohrstange (2) einen ersten Abschnitt (21) definiert, der einer Torsion unterliegt, wobei die Maschine **dadurch gekennzeichnet** ist, dass sie eine Messvorrichtung (1) nach einem vorangehenden Anspruch umfasst.

11. Maschine nach Anspruch 10, die eine Betätigungseinrichtung zum Drehen der Spindel mit einem Drehmoment und eine Steuereinheit zum Steuern der Betätigungseinrichtung, die mit einer Berechnungseinheit (17) der Messvorrichtung (1) verbunden ist, umfasst, um das Drehmoment gemäß einem Torsionswinkel (Δθ) des ersten Abschnitts (21) einzustellen, der durch die Messvorrichtung (1) detektiert wird.

**Revendications**

1. Dispositif de mesure pour un alésoir comprenant une barre d'alésage (2), qui peut être déplacée le long de et autour d'un axe de travail (Z) et est pourvue d'une première extrémité (3) qui est appropriée pour recevoir un outil d'usinage, et une broche (5) pour recevoir de façon coulissante ladite barre d'alésage (2) et y transmettre un couple à une zone de raccordement (7), une première portion (21) de ladite barre d'alésage (2) comprise entre ladite première extrémité (3) et ladite zone de raccordement (7) étant soumise à des forces de torsion, ledit dispositif de mesure (1) comprenant :

    - un élément tubulaire (9) inséré dans ladite barre d'alésage (2) et pourvu d'une première partie d'extrémité (10) attachée à ladite première extrémité (3) de telle façon que ledit élément tubulaire (9) tourne en rotation avec cette dernière ;
    - un premier moyen de capteur (12) associé audit élément tubulaire (9) pour détecter un premier signal (S1) indiquant la rotation dudit élément tubulaire (9) et ainsi de ladite première extrémité (3) ;
    - un second moyen de capteur (13) associé à une seconde portion (22) de ladite barre d'alésage (2) qui n'est pas soumise à des forces de torsion pour détecter un second signal (S2) indiquant la rotation de ladite barre d'alésage (2) dans ladite seconde portion (22) ; et
    - une unité de calcul (17) pour recevoir et traiter ledit premier signal (S1) et ledit second signal (S2) et calculer un déplacement angulaire (Δθ) entre ladite première extrémité (3) et ladite seconde portion (22), ledit déplacement angulaire (Δθ) étant un angle de torsion auquel ladite première portion (21) est soumise.

2. Dispositif selon la revendication 1, dans lequel ledit premier moyen de capteur (12) est relié audit élément tubulaire (9) à une seconde partie d'extrémité (11) qui se trouve à l'opposé de ladite première partie d'extrémité (10) et adjacente à ladite seconde portion (22) de ladite barre d'alésage (2).

3. Dispositif selon les revendications 1 ou 2, dans lequel ledit élément tubulaire (9) est logé dans un évidement longitudinal (18) de ladite barre d'alésage (2), en particulier sensiblement coaxial audit axe de travail (Z).

4. Dispositif selon l'une quelconque des revendications précédentes, dans lequel ladite unité de calcul (17) comprend un détecteur de phase (14) agencé pour traiter ledit premier signal (S1) et ledit second signal (S2) et calculer un signal de sortie (Sout) indiquant ledit déplacement angulaire (Δθ).

5. Dispositif selon la revendication 4, dans lequel ledit détecteur de phase (14) est choisi parmi un groupe comprenant : une porte OU exclusif (XOR), qui peut également être implémentée avec une pluralité de portes de type NON ET (NAND), un circuit d'échantillonnage et de maintien, une pompe de chargement, une cellule Gilbert.

6. Dispositif selon les revendications 4 ou 5, dans lequel ladite unité de calcul (17) comprend un filtre passe-bas (15) agencé pour générer un signal filtré (Sf) dépourvu des composants de fréquences dudit signal de sortie (Sout) au-dessus d'une fréquence de coupure.

7. Dispositif selon la revendication 6, dans lequel ledit filtre passe-bas (15) est un circuit RC.

8. Dispositif selon les revendications 6 ou 7, dans lequel ladite unité de calcul (17) comprend un convertisseur analogique-numérique (16) agencé pour convertir ledit signal filtré (Sf) de type analogue en signal numérique (Sd), ledit signal numérique (Sd) correspondant audit déplacement angulaire (Δθ).

9. Dispositif selon la revendication 8, dans lequel ladite unité de calcul (17) est agencée pour traiter ledit déplacement angulaire (Δθ) et calculer un couple s'exerçant sur ladite barre d'alésage (2) à ladite première extrémité (3).

10. Alésoir comprenant une barre d'alésage (2), qui peut être déplacée le long de et autour d'un axe de travail (Z) et est pourvue d'une première extrémité (3) qui est appropriée pour recevoir un outil d'usinage, et une broche (5) pour recevoir de façon coulissante ladite barre d'alésage (2) et y transmettre un couple à une zone de raccordement (7) définissant sur ladite barre d'alésage (2) une première portion (21) soumise à un couple, ledit alésoir machine étant **caractérisée en ce qu'**elle comprend un dispositif de mesure (1) selon l'une quelconque des revendications précédentes.

11. Alésoir selon la revendication 10, comprenant un moyen d'actionnement pour faire tourner en rotation ladite broche avec un couple et une unité de commande pour commander ledit moyen d'actionnement et reliée à une unité de calcul (17) dudit dispositif de mesure (1) pour ajuster ledit couple selon un angle de torsion ($\Delta\theta$) de ladite première portion (21) détecté par ledit dispositif de mesure (1).

Fig. 1

EP 2 615 438 B1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4432245 A